# EUROPEAN PATENT SPECIFICATION

(11) **EP 1 787 045 B1**
(45) Date of publication and mention of the grant of the patent: **29.04.2009**
(21) Application number: 04804642.9
(22) Date of filing: 01.12.2004
(51) Int. Cl.: F16H 13/04

(54) **AN IMPROVED DRIVE FOR AN INTERNAL-COMBUSTION ENGINE FOR A MOTOR VEHICLE**
VERBESSERTER ANTRIEB FÜR VERBRENNUNGSMOTOR FÜR EIN KRAFTFAHRZEUG
SYSTEME D'ENTRAINEMENT DESTINE A UN MOTEUR A COMBUSTION INTERNE D'UN VEHICULE A MOTEUR

(30) Priority: 02.12.2003 IT TO20030964
(43) Date of publication of application: 23.05.2007
(73) Proprietor: Dayco Europe S.r.l. con Unico Socio, Frazione Chieti Scalo 66100 Chieti (IT)
(72) Inventor: DEL VECCHIO, Pietro, 71016 San Severo (IT); MONTANI, Andrea, 66100 Chieti (IT)
(74) Representative: Jorio, Paolo
(86) International application number: PCT/EP2004/053215
(87) International publication number: WO 2005/054713

(56) References cited:
- DE-A- 3 934 884
- DE-U- 1 810 126
- GB-A- 452 982
- US-A- 2 430 500
- US-A- 3 988 941
- US-A- 4 994 000
- US-A- 5 938 115

## Description

### TECHNICAL FIELD

The present invention relates to an improved drive for an internal-combustion engine of a motor vehicle.

### BACKGROUND ART

A drive, for example a drive for accessories, generally comprises a drive pulley operated by the engine shaft and at least one driven pulley which drives an auxiliary member, for example an alternator, said pulleys being connected to one another via a belt, for example of the poly-V type.

There is known for example in DE 3934884 A1 the use of a friction wheel for controlling a second auxiliary member, for example a water pump, situated in a lateral position with respect to the drive pulley. The friction wheel co-operate by friction with the back of the belt and is thus driven by the drive pulley for actuating the water pump, for example by means of a second friction wheel permanently connected to the latter.

In the configuration of the type described above, a drive for accessories presents a number of drawbacks.

In particular, in unfavourable climatic conditions, such as in the case of rain, particles of water can deposit on the surfaces in contact, with consequent stopping or malfunctioning of the water pump.

Furthermore, should there be provided a device for bringing the friction wheel closer to activate selectively the water pump, the friction wheels and the belts commonly used cause vibrations and noise during the transients of engagement and disengagement.

### DISCLOSURE OF INVENTION

The purpose of the present invention is to provide a friction wheel which will be free from the drawbacks described above.

The above purpose is achieved by a friction wheel, as defined in Claim 1.

### BRIEF DESCRIPTION OF THE DRAWING

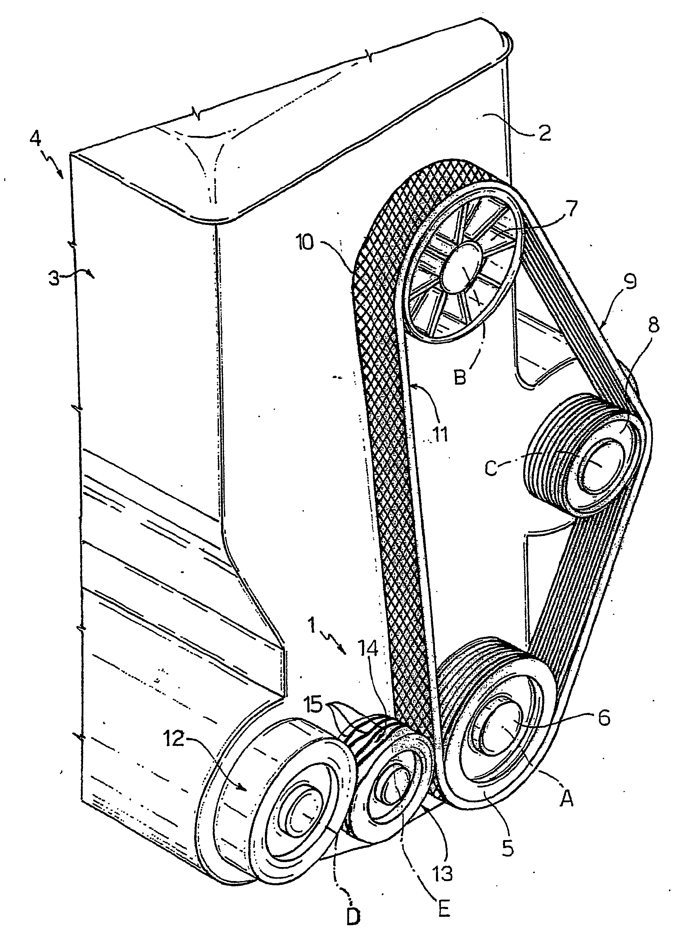

For a better understanding of the present invention, there is now described a preferred embodiment, purely by way of non-limiting example and with reference to the attached plate of drawings, in which Figure 1 shows a drive for accessories according to the present invention.

### BEST MODE FOR CARRYING OUT THE INVENTION

In Figure 1, designated as a whole by 1 is a drive for accessories set on a wall 2 of a casing 3 of an internal-combustion engine 4.

The drive 1 comprises: a drive pulley 5, driven by an engine shaft 6 with axis A coming out from the wall 2; a first driven pulley 7 of an alternator (not illustrated), which can turn about a second axis B parallel to the axis A; and a tensioning pulley 8, which can turn about a third axis C parallel to the axis A.

The pulleys 5, 7 and the tensioning pulley 8 are connected to one another by a belt 9 comprising integrally a back 10, and are arranged at the vertices of a triangular path, in which the side that joins the axes A and B identifies a branch 11 of the drive 1.

According to the invention, the back 10 is embossed. Embossing is a surface-finishing process that enables a succession of reliefs and recesses to be obtained, which may even be smaller than one millimetre, on the surface of compliant materials, such as, for example, polymeric rubber, and is performed generally according to two different moralities.

In fact, it is possible to obtain the reliefs and recesses by machining away using cutting tools that act on the edge of the belt after the vulcanizing operation, or else by moulding during the vulcanizing operation itself, using an expansion box coated with a fabric, the surface structure of which is 'impressed' and 'copied' in the elastomeric material of the belt.

Driven by the embossed back 10 of the belt 9 is a second accessory (not illustrated), for example a water pump. For, this purpose, the drive 1 moreover comprises a friction wheel 12, which can turn about a fourth axis D parallel to the axis A and is set on the opposite side of the tensioning pulley 8 with respect to the vertical branch 11, substantially in a position corresponding to the drive pulley 5.

Set between the friction wheel 12 and the pulley 5, co-operates with both the friction wheel 12 and the pulley 5 an intermediate friction wheel 13 that turns about a fifth axis E and transfers the torque from the engine shaft 6 to the water pump.

In particular, the friction wheel 13 co-operates permanently with the back 10 of the belt 9 in a position corresponding to the arc thereof that runs over the drive pulley 5. The axis E of the friction wheel 13 is preferably mobile under the action of a control device (known and not illustrated), by means of which the friction wheel 13 can be brought up to and moved away from the friction wheel 12 for activating and deactivating the water pump.

The friction wheel 13 has a circumferential friction surface 14, which preferably has a circumferential development that is not a submultiple of the length of the back 10 and has a multiplicity of substantially circumferential grooves 15 such as to drain away any humidity or water that may be present on the back 10 of the belt 9 in an area corresponding to the friction wheel 13.

The grooves 15 of the friction wheel 13 follow a substantially undulated and periodic circumferential path having the same period along the friction surface 14.

In particular, the grooves 15 are in equal number, and two adjacent grooves are arranged specularly with respect to one another so as to be out of phase by one half-period.

According to another embodiment, the grooves are set alongside one another and spaced at a constant distance point by point so as to be in phase.

Operation of the drive for accessories is described in what follows.

The friction wheel 13 transfers the torque from the engine shaft 6 to the friction wheel 12 by friction.

When the drive 1. is in motion, the combined action of the embossed back 10 and the grooves 15 enables draining of any water that may be present between the surfaces in contact, so favouring adherence.

The succession of surface reliefs and recesses obtained by embossing affords characteristics of stiffness different from those of a smooth back, forming a compliant layer, and consequently enables a gradual distribution of the contact pressure.

Furthermore, since the grooves 15 are not circular, their trace on the plane of contact between the clutch wheel 13 and the belt 9 is displaced in a direction parallel to the axis E, instant by instant.

From an examination of the characteristics of the drive 1 made according to the present invention, the advantages that it enables emerge clearly.
In particular, the joint action of the embossed back 10 and of the grooves 15 enables draining of any water that may be present between the surfaces in contact and, consequently, prevention of phenomena of "aquaplaning" that can jeopardize correct driving of the auxiliary member, in particular the water pump.

A further advantage of the present invention lies in the fact that a back presenting a compliant layer obtained by embossing enables a gradual distribution of the contact pressure tending to dampen the vibrations and the noise.

According to the preferred embodiments described, grooves having a non-circular path enable prevention of localized wear of the back of the belt.

Finally, it is clear that modifications and variations can be made to the drive described and illustrated herein, without thereby departing from the sphere of protection of the present invention, as defined in the annexed claims.

In particular, the present invention can be adapted to any type of belt drive, for example the one for the distribution system.

Furthermore, the reliefs and the recesses obtained by embossing can have any shape whatsoever, for example that of a truncated pyramid if obtained by moulding, or else can reproduce the profile of the cutting tool if obtained by machining.

The axis E of the friction wheel 13 can be either fixed or mobile, causing, in the first case, a continuous driving of the accessory driven by the friction wheel 12 and, in the second case, a selective actuation governed by a remote control.

Alternatively, the friction wheel 13 can be carried by the shaft of the water pump, and the drive can comprise a coupling set between the shaft of the pump and the friction wheel to enable selective driving of the pump itself.

The path of the grooves 15 can be closed or open, or a combination of the two, and the grooves 15 can be the same as one another or different from one another.

Furthermore, two grooves set alongside one another can be brought closer together and be substantially tangential to a circumference belonging to the friction surface 14.

## Claims

1. A drive (1) for an internal-combustion engine (4) of a motor vehicle, comprising: at least one drive pulley (5); at least one driven pulley (7) connected to a first driven member; at least one belt (9), which presents a back (10) and is run over said drive pulley (5) and driven pulley (7); and at least one friction wheel (13) having an axis (E) and presenting a friction surface (14) co-operating with said back (10), said drive being **characterized in that** said back (10) is embossed and said at least one friction wheel (13) cooperates with said back (10) of said belt (9) on an arc thereof that runs over said drive pulley (5).

2. The drive according to Claim 1, **characterized in that** said friction surface (14) has at least one substantially circumferential draining groove (15).

3. The drive according to Claim 2, **characterized in that** said at least one groove (15) follows a substantially undulated path.

4. The drive according to either Claim 2 or Claim 3, **characterized in that** said path is a closed path.

5. The drive according to one of Claims 2 to 4, **characterized in that** said path is periodic along the circumferential development of said friction surface (14).

6. The drive according to any one of Claims 2 to 5, **characterized in that** said friction wheel (13) has a multiplicity of grooves (15).

7. The drive according to Claim 6, **characterized in that** said grooves (15) are symmetrical with respect to a plane perpendicular to said axis (E).

8. The drive according to either Claim 6 or Claim 7, **characterized in that** two adjacent grooves are substantially tangential to one and the same circumference belonging to the friction surface (14).

9. The drive according to any one of the preceding claims, **characterized in that** said friction wheel (13) is selectively connectable to an auxiliary member of said engine (4).

10. The drive according to Claim 9, **characterized in that** it comprises a second friction wheel (12) connected to said driven member, said first friction wheel (13) being mobile for co-operating selectively with said second friction wheel (12).

## Patentansprüche

1. Antrieb (1) für einen Verbrennungsmotor (4) eines Kraftfahrzeugs, der umfasst:
wenigstens eine Antriebs-Riemenscheibe (5); wenigstens eine Abtriebs-Riemenscheibe (7), die mit einem ersten Abtriebs-Element verbunden ist; wenigstens einen Riemen (9), der eine Rückseite (10) aufweist und über die Antriebs-Riemenscheibe (5) und über die Abtriebs-Riemertsoheibe (7) geführt wird; und wenigstens ein Reibrad (13), das eine Achse (E) hat und eine Reibfläche (14) aufweist, die mit der Rückseite (10) zusammenwirkt, wobei der Antrieb **dadurch gekennzeichnet ist, dass** die Rückseite (10) geprägt ist und das wenigstens eine Reibrad (13) mit der Rückseite (10) des Riemens (9) an einem Bogen desselben zusammenwirkt, der über die Antriebs-Riemenscheibe (5) läuft.

2. Antrieb nach Anspruch 1, **dadurch gekennzeichnet, dass** die Reibfläche (14) wenigstens eine im Wesentlichen in Umfangsrichtung verlaufende Ableitnut (15) aufweist.

3. Antrieb nach Anspruch 2, **dadurch gekennzeichnet, dass** die wenigstens eine Nut (15) einem im Wesentlichen wellenförmigen Weg folgt.

4. Antrieb entweder nach Anspruch 2 oder Anspruch 3, **dadurch gekennzeichnet, dass** der Weg ein geschlossener Weg ist,

5. Antrieb nach einem der Ansprüche 2 bis 4, **dadurch gekennzeichnet, dass** der Weg entlang der Umfangsabwicklung der Reibfläche (14) periodisch ist.

6. Antrieb nach einem der Ansprüche 2 bis 5, **dadurch gekennzeichnet, dass** das Reibrad (13) eine Vielzahl von Nuten (15) aufweist.

7. Antrieb nach Anspruch 6, **dadurch gekennzeichnet, dass** die Nuten (15) in Bezug auf eine Ebene senkrecht zu der Achse (E) symmetrisch sind

8. Antrieb nach Anspruch 6 oder Anspruch 7, **dadurch** gekenntzeichnet, dass zwei benachbarte Nuten im Wesentlichen ein und denselben Umfang tangieren, der zu der Reibfläche (14) gehört.

9. Antrieb nach einem der vorangehenden Ansprüche, **dadurch gekennzeichnet, dass** das Reibrad (13) selektiv mit einem Hilfselement des Motors (4) verbunden werden kann.

10. Antrieb nach Anspruch 9, **dadurch gekennzeichnet, dass** er ein zweites Reibrad (12) umfasst, das mit dem Abtriebs-Element verbunden ist, wobei das erste Reibrad (13) mobil ist, um selektiv mit dem zweiten Reibrad (12) zusammenzuwirken.

## Revendications

1. Système d'entraînement (1) destiné à un moteur à combustion interne (4) d'un véhicule à moteur, comprenant : au moins une poulie menante (5), au moins une poulie menée (7) reliée à un premier élément entraîné, au moins une courroie (9) qui présente un dos (10) et défile sur ladite poulie menante (5) et ladite poulie menée (7), et au moins une roue à friction (13) comportant un axe (E) et présentant une surface de friction (14) coopérant avec ledit dos (10), ledit système d'entraînement étant **caractérisé en ce que** ledit dos (10) est embossé et ladite au moins une roue à friction (13) coopère avec ledit dos (10) de ladite courroie (9) à une extrémité de celle-ci qui défile sur ladite poulie menante (5).

2. Système d'entraînement selon la revendication 1, **caractérisé en ce que** ladite surface de friction (14) comporte au moins une gorge d'évacuation sensiblement circonférentielle (15).

3. Système d'entraînement selon la revendication 2, **caractérisé en ce que** ladite au moins une gorge (15) suit un trajet sensiblement ondulé.

4. Système d' entraînement selon la revendication 2 ou la revendication 3, **caractérisé en ce que** ledit trajet est un trajet fermé.

5. Système d'entraînement selon l'une des revendications 2 à 4, **caractérisé en ce que** ledit trajet est périodique suivant le développement circonférentiel de ladite surface de friction (14).

6. Système d'entraînement selon l'une quelconque des revendications 2 à 5, **caractérisé en ce que** ladite roue à friction (13) comporte une multitude de gorges.

7. Système d'entraînement selon la revendication 6, **caractérisé en ce que** lesdites gorges (15) sont symétriques par rapport à un plan perpendiculaire audit axe (E).

8. Système d'entraînement selon la revendication 6 ou la revendication 7, **caractérisé en ce que** deux gorges adjacentes sont sensiblement tangentielles à une et même circonférence appartenant à la surface de friction (14).

9. Système d'entraînement selon l'une quelconque des revendications précédentes, **caractérisé en ce que** ladite roue à friction (13) peut être reliée sélectivement à un élément auxiliaire dudit moteur (4).

10. Système d'entraînement selon la revendication 9, **caractérisé en ce qu'**il comprend une deuxième roue à friction (12) reliée audit élément entraîné, ladite première roue à friction (13) étant mobile afin de coopérer sélectivement avec ladite deuxième roue à friction (12).
